# EUROPÄISCHE PATENTSCHRIFT

(11) **EP 3 081 500 B1**
(45) Veröffentlichungstag und Bekanntmachung des Hinweises auf die Patenterteilung: **20.12.2017**
(21) Anmeldenummer: 15163951.5
(22) Anmeldetag: 17.04.2015
(51) Int. Cl.: B65B 57/14, B65B 9/08, G01N 21/95, G01N 21/956

(54) **VORRICHTUNG ZUM HERSTELLEN VON SCHLAUCHBLISTERN**
DEVICE FOR THE PRODUCTION OF BLISTER TUBES
DISPOSITIF DE FABRICATION DE BLISTER SOUPLE

(43) Veröffentlichungstag der Anmeldung: 19.10.2016
(73) Patentinhaber: Becton Dickinson Rowa Germany GmbH, 53539 Kelberg (DE)
(72) Erfinder: Hellenbrand, Christoph, 56761 Kaifenheim (DE)
(74) Vertreter: Zenz Patentanwälte Partnerschaft mbB

(56) Entgegenhaltungen:
- EP-A1- 2 067 699
- DE-A1-102008 047 975
- JP-A- H11 206 854
- JP-Y2- S5 922 002
- US-A1- 2012 290 129
- US-A1- 2014 318 078

## Beschreibung

Die Erfindung betrifft eine Vorrichtung zum Herstellen von Schlauchblistern mit einer Mehrzahl von Vorratsbehältern zum Bereitstellen von Medikamentenportionen, mit Dispensiervorrichtungen zum selektiven Abgeben von Medikamentenportionen aus den Vorratsbehältern und mit einer Sammelvorrichtung zum Aufnehmen der von den Dispensiervorrichtungen abgegebenen Medikamentenportionen und Weiterleiten der Medikamentenportionen an eine Verblistervorrichtung, wobei die Verblistervorrichtung die empfangenen Medikamentenportionen gruppenweise in Taschen eines Schlauchblisters einfüllt, wobei eine in eine Tasche eingefüllte Gruppe eine Medikamentenportion oder mehrere gleichartige oder unterschiedliche Medikamentenportionen umfasst.

Die Vorrichtungen der eingangs genannten Art werden zur Arzneimittelverblisterung, insbesondere für eine patientenindividuelle Arzneimittelverblisterung verwendet. Hierbei werden die Arzneimittel eines Patienten in abgabegerechte Portionen verpackt. Bei einem Schlauchblister handelt es sich üblicherweise um eine Kette aneinanderhängender Schlauchbeutel oder Taschen, wobei jeder Beutel oder jede Tasche diejenigen Medikamentenportionen (das heißt Filmtabletten, Kapseln oder Dragees) enthält, die ein Patient zu einem vorgegeben Einnahmezeitpunkt einnehmen soll. Die Schlauchblister werden üblicherweise mit dem Namen des Patienten, den jeweiligen Einnahmezeitpunkten, den enthaltenen Arzneimitteln sowie mit Verfalldaten und Chargennummern beschriftet.

Beispielsweise enthält ein Schlauchblister für einen Patienten, der am morgen, mittags und abends jeweils eine vorgegebene Anzahl und Art von Arzneimitteln einnehmen soll, für jeden Tag drei Schlauchbeutel oder Taschen, so dass ein für eine Woche vorgesehener Schlauchblister beispielsweise 21 Taschen aufweist.

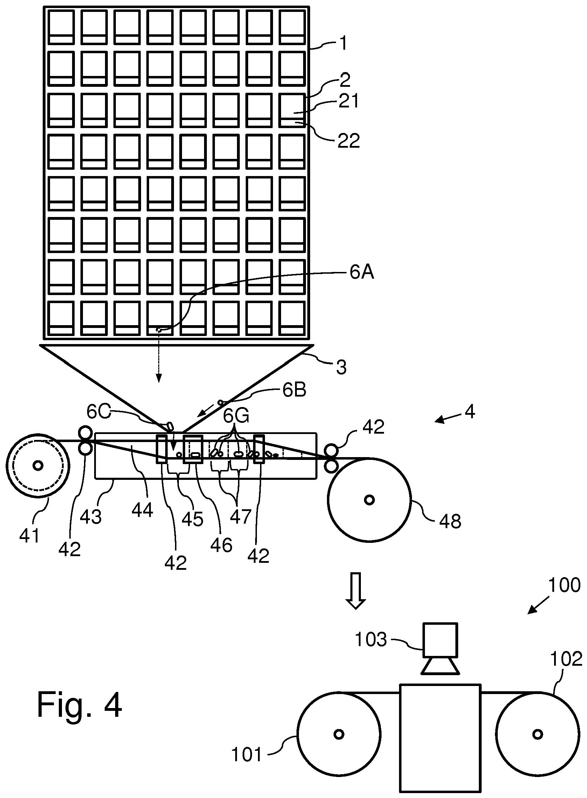

Diese Schlauchblister werden üblicherweise mit Hilfe von Automaten hergestellt, wie sie schematisch in Figur 4 dargestellt sind. Solche Automaten enthalten eine Vielzahl von Vorratsbehältern 21, wobei bei diesem Beispiel in jedem Vorratsbehälter 21 eine Vielzahl von Medikamentenportionen einer vorgegebenen Medikamentenart enthalten ist. Jeder Vorratsbehälter 21 ist mit einer Dispensiervorrichtung 22 zum selektiven Abgeben einzelner Medikamentenportionen gekoppelt und bildet mit dieser eine Dispensierstation 2. Die aus den Dispensiervorrichtungen 22 austretenden Medikamentenportionen 6A, 6B, 6C werden beispielsweise von einem Auffangtrichter 3 aufgefangen und an einer Austrittsöffnung des Auffangtrichters 3 an eine Verblistervorrichtung 4 abgegeben. Eine Steuervorrichtung des Automaten sorgt dafür, dass die jeweils zum Einfüllen in einen Schlauchbeutel oder eine Tasche 47 vorgesehenen Medikamentenportionen 6 etwa gleichzeitig durch Ansteuerung der zugehörigen Dispensiervorrichtungen 22 aus den entsprechenden Dispensierstationen 2 ausgegeben werden, in den Auffangtrichter 3 fallen und gemeinsam an die Verblistervorrichtung 4 abgegeben werden. Die Verblistervorrichtung 4 formt aus einem bereitgestellten Verpackungsmaterial 41 einen Schlauchblister, wobei jedes Mal dann, wenn eine neue Tasche 47 geformt wird, die Gruppe der in die Tasche einzubringenden Medikamentenportionen aus dem Auffangtrichter 3 in die noch oben offene Tasche 45 eingebracht wird, wonach die Tasche 45 sofort verschlossen wird. Dieser Vorgang wiederholt sich für jede nacheinander hergestellte Tasche 45, 47. Der so hergestellte Schlauchblister wird beispielsweise auf eine Rolle 48 aufgewickelt.

Es ist klar, dass bei diesem Verfahren des Befüllens der Beutel des Schlauchblisters verschiedene Mängel auftreten können. So können beispielsweise einzufüllende Medikamentenportionen zerstört werden, z.B. Filmtabletten zerbrechen oder Kapseln aufplatzen. Es können Medikamentenportionen fehlen oder versehentlich falsche oder überschlüssige Medikamentenportionen in eine Tasche gelangen.

Deshalb ist es üblich, die gefertigten Schlauchblister nach ihrer Herstellung einer gründlichen Inspektion zu unterziehen. Dabei wird sukzessive der Inhalt jeder einzelnen Tasche eines Schlauchblisters überprüft, indem - wie es in Figur 4 schematisch dargestellt ist - die Rolle mit dem aufgewickelten Schlauchblister entnommen und als zu inspizierende Rolle 101 einer Inspektionsstation 100 zugeführt und dort abgewickelt wird, so dass die einzelnen Blistertaschen nebeneinander liegen und an einer optischen Inspektionsvorrichtung mit einer Kamera 103 vorbeigeführt werden können. Sofern dabei ein Fehler festgestellt wird, ist üblicherweise nicht nur die betroffene Tasche mit ihrem Inhalt zu verwerfen, sondern der gesamte Schlauchblister. Der betroffene Schlauchblister wird dann neu hergestellt. Alternativ könnte der Inhalt der betroffenen Tasche manuell repariert werden, was zu einem hohen Aufwand führen würde. Wird in der Inspektionsstation 100 kein Fehler festgestellt, so kann der ordnungsgemäß befüllte Schlauchblister wieder auf eine Rolle 102 aufgewickelt werden.

Die US 2012/0290129 A1 beschreibt ein System, welches das Problem von möglichen Fehlbefüllungen behandelt. Dazu ist ein üblicher Verpackungsautomat, mit einer nachgeordneten mehrstufigen Inspektionsvorrichtung kombiniert. Basierend auf Daten von vier Sensoren wird bei dem System entschieden, ob bereits verpackte Medikamentenportionen, die laut einer Ausführungsform in nicht versiegelten vorläufigen Verpackungen sind, einer erneuten manuellen Inspektion und anschließender Nachbehandlung oder direkt einer Finalisierungseinrichtung zugeführt werden, bei welcher die Medikamentenportionen betreffenden Informationen auf die Umverpackungen aufgebracht werden. Auch wenn dieses System die Wahrscheinlichkeit von fehlerhaften Zusammenstellungen von Medikamentenportionen vermindert ist auch bei diesem System zwingend eine manuelle Nachbearbeitung erforderlich.

Die DE 10 2008 047 975 A1, die den nächsten Stand der Technik offenbart, behandelt u.a. das Problem möglicher Fehlmedikationen bei Schlauchblistern, also fehlerhaften Zusammenstellungen von Medikamentenportionen in einem Blisterbeutel bzw. einer Blistertasche eines Schlauchblisters. Gemäß dieser Druckschrift werden die Tabletten eines fehlerhaft bestückten Trägers mit einer berührungslos arbeitenden Kontrolleinrichtung identifiziert und unmittelbar entsorgt, ohne der Verpackungseinrichtung zugeführt zu werden. Aufgabe der Erfindung ist es, die Notwendigkeit einer manuellen Korrektur einer falsch befüllten Tasche zu vermeiden.

Diese Aufgabe wird erfindungsgemäß durch eine Vorrichtung zum Herstellen von Schlauchblistern mit den Merkmalen des Anspruchs 1 gelöst.

Die erfindungsgemäße Vorrichtung zum Herstellen von Schlauchblistern weist eine Mehrzahl von Vorratsbehältern zum Bereitstellen von Medikamentenportionen (das heißt beispielsweise Filmtabletten, Kapseln oder Dragees) und Dispensiervorrichtungen zum selektiven Abgeben von Medikamentenportionen aus den Vorratsbehältern auf. Die Vorratsbehälter können beispielsweise von einer ersten Vorratsbehälterart sein, die eine Vielzahl von gleichartigen Medikamentenportionen einer vorgegebenen Medikamentenart enthält und mit einer Dispensiervorrichtung zum selektiven Abgeben einzelner Medikamentenportionen gekoppelt ist. Hierbei kann die Dispensiervorrichtung beispielsweise Teil einer den Vorratsbehälter enthaltenden Dispensierstation sein. Alternativ oder zusätzlich können mehrere Vorratsbehälter einer zweiten Art vorgesehen sein, die jeweils eine Medikamentenportion oder einige wenige gleichartige der verschiedenen Medikamentenportionen enthalten. Solche Vorratsbehälter werden beispielsweise von kleinen in horizontalen Reihen und/oder Spalten matrixartig angeordneten Aufnahmefächern eines manuell befüllbaren Vorratsmagazins gebildet. Die Vorrichtung zum Herstellen von Schlauchblistern weist außerdem eine Sammelvorrichtung zum Aufnehmen der von den Dispensiervorrichtungen abgegebenen Medikamentenportionen und zum Weiterleiten der Medikamentenportionen an eine Verblistervorrichtung auf. Die Verblistervorrichtung füllt die empfangenen Medikamentenportionen gruppenweise in Taschen eines Schlauchblisters ein, wobei eine in eine Tasche eingefüllte Gruppe eine Medikamentenportion oder auch mehrere gleichartige oder unterschiedliche Medikamentenportionen umfasst. Erfindungsgemäß ist zwischen der Sammelvorrichtung und der Verblistervorrichtung eine Inspektionspuffervorrichtung angeordnet. Die Inspektionspuffervorrichtung enthält eine Puffervorrichtung zum Aufnehmen der von der Sammelvorrichtung weitergeleiteten Medikamentenportionen und zum Zwischenlagern zumindest einer zum Einfüllen in eine Tasche vorgesehenen Gruppe von Medikamentenportionen, eine Sensorvorrichtung zum Erfassen eines Abbilds und/oder vorgegebener Eigenschaften der zwischengelagerten Gruppe von Medikamentenportionen und eine Auswerte- und Steuereinrichtung, die anhand des von der Sensorvorrichtung erfassten Abbilds und/oder der von der Sensorvorrichtung erfassten vorgegebenen Eigenschaften bestimmt, ob die zwischengelagerte Gruppe von Medikamentenportionen einer vorgegebenen Gruppe einzufüllender Medikamentenportionen entspricht, und die die Puffervorrichtung derart steuert, dass diese nur dann, wenn die zwischengelagerte Gruppe der vorgegebenen Gruppe entspricht, die zwischengelagerte Gruppe an die Verblistervorrichtung weiterleitet. Die Auswerte- und Steuervorrichtung bestimmt somit, ob die zwischengelagerte Gruppe als "Ist-Gruppe" einer vorgegebenen Gruppe als "Soll-Gruppe" entspricht.

Das Zwischenschalten einer Inspektionspuffervorrichtung, d.h. einer Vorrichtung zum Puffern und Überprüfen einer Gruppe von Medikamentenportionen, erlaubt es, die Korrektheit der zum Einfüllen in eine Tasche vorgesehenen Gruppe von Medikamentenportionen bereits vor dem Einfüllen zu überprüfen und bei Feststellung eines Fehlers das Einfüllen zu vermeiden. Auf diese Weise wird vermieden, dass ein gesamter Schlauchblister wegen einer fehlerhaft befüllten Tasche neu hergestellt oder repariert werden muss. Zwar verringert die Vorgehensweise die Geschwindigkeit der Herstellung der Schlauchblister; sie gestattet aber die Herstellung von Schlauchblistern, die anschließend nicht erneut inspiziert zu werden brauchen.

Die Puffervorrichtung weist eine Transportvorrichtung auf, die die von der Sammelvorrichtung weitergeleiteten Medikamentenportionen an einem ersten Ort aufnimmt und zu einem zweiten Ort transportiert, an dem die Sensorvorrichtung das Abbild und/oder die vorgegebenen Eigenschaften der zwischengelagerten Gruppe von Medikamentenportionen erfasst. Das Vorsehen der Transportvorrichtung ermöglicht die räumliche Trennung von Auffangort (erster Ort) und Inspektionsort (zweiter Ort) und gestattet eine Vereinfachung der Konstruktion. Zu diesem Zweck kann die Transportvorrichtung geeignete Aufnahmebehälter und Mittel zum Bewegen der Aufnahmebehälter umfassen, die an dem ersten Ort die Medikamentenportionen aufnehmen, bis jeweils eine Gruppe vollständig ist, und diese dann zu dem zweiten Ort transportiert werden, an dem die Sensorvorrichtung das Abbild und/oder die vorgegebenen Eigenschaften erfasst. Die Transportvorrichtung kann andererseits auf ein Bewegen von Behältern verzichten und stattdessen mechanische Lenk- oder Leitvorrichtungen umfassen, so dass die eintreffenden Medikamentenportionen an einem Ort aufgefangen und mittels der Lenkvorrichtungen zu dem zweiten Ort gelenkt werden.

Die Transportvorrichtung leitet dann, wenn die zwischengelagerte Gruppe von Medikamentenportionen der vorgegebenen Gruppe einzufüllender Medikamentenportionen entspricht (das heißt die Ist-Gruppe der Soll-Gruppe entspricht), die zwischengelagerte Gruppe an die Verblistervorrichtung weiter.

Erfindungsgemäß transportiert die Transportvorrichtung dann, wenn die zwischengelagerte Gruppe von Medikamentenportionen nicht der vorgegebenen Gruppe einzufüllender Medikamentenportionen entspricht, weil der zwischengelagerten Gruppe eine oder mehrere Medikamentenportionen fehlen, die zwischengelagerte Gruppe zurück zu dem ersten Ort, um dort der Gruppe die fehlende Medikamentenportion bzw. die fehlenden Medikamentenportionen zuführen zu können. Dies gestattet eine unmittelbare Korrektur einer solchen Gruppe vor dem Einfüllen in die Tasche des Schlauchblisters.

Bei einer bevorzugten Weiterbildung sondert die Transportvorrichtung dann, wenn die zwischengelagerte Gruppe von Medikamentenportionen nicht der vorgegebenen Gruppe einzufüllender Medikamentenportionen entspricht, weil die zwischengelagerte Gruppe falsche, defekte und/oder überzählige Medikamentenportionen enthält, die zwischengelagerte Gruppe aus. Beispielsweise wird die Gruppe ausgesondert, indem sie zu einem Abfallbehälter transportiert wird. Die Vorgehensweise des Rücktransports der Gruppe zum ersten Ort bei Feststellen fehlender Medikamentenportionen kann somit mit der Vorgehensweise des Aussonderns der Gruppe bei Feststellung falscher, defekter oder überzähliger Medikamentenportionen kombiniert werden.

Bei einer bevorzugten Ausführungsform ist die Vorrichtung zum Herstellen von Schlauchblistern, bei der die Puffervorrichtung eine Transportvorrichtung aufweist, dadurch gekennzeichnet, dass die Transportvorrichtung einen Horizontalförderer umfasst, der wenigstens ein Aufnahmefach aufweist, das zur Aufnahme von Medikamentenportionen an den ersten Ort und zur Erfassung eines Abbilds und/oder vorgegebener Eigenschaften der Gruppe durch die Sensorvorrichtung an den zweiten Ort bewegt werden kann. Beispielsweise kann der Horizontalförderer, der beispielsweise ein umlaufendes Förderband umfasst, so bewegt werden, dass ein Aufnahmefach sich zunächst an einem ersten Ort befindet, an dem es die Medikamentenportionen auffängt. Danach wird das Aufnahmefach horizontal in einer ersten Transportrichtung zu dem zweiten Ort bewegt, an dem die Sensorvorrichtung das Abbild und/oder die vorgegebenen Eigenschaften erfasst. Wird dann beispielsweise festgestellt, dass die zwischengelagerte Gruppe ("Ist-Gruppe") der vorgegebenen Gruppe einzufüllender Medikamentenportionen ("Soll-Gruppe") entspricht, so könnte bei diesem Ausführungsbeispiel der Horizontalförderer weiter in der ersten Richtung bewegt werden bis zu einem dritten Ort, an dem das Aufnahmefach geleert (beispielsweise ausgekippt) wird, wobei die austretenden Medikamentenportionen in eine noch offene Tasche des Schlauchblisters eingefüllt werden. Wird dagegen beispielsweise festgestellt, dass die zwischengelagerte Gruppe von Medikamentenportionen nicht der vorgegebenen Gruppe einzufüllender Medikamentenportionen entspricht, weil eine Medikamentenportion oder mehrere Medikamentenportionen fehlen, so könnte der Horizontalförderer das Aufnahmefach zurück in die entgegengesetzte Richtung zu dem ersten Ort bewegen. Hier könnten fehlende Medikamentenportionen nachgefüllt werden. Nach einer nicht erfindungsgemäßen Ausführungsform wäre es auch denkbar, dass grundsätzlich alle fehlerhaften zwischengelagerten Gruppen von Medikamentenportionen zurück in der entgegengesetzten Richtung über den ersten Ort hinaus zu einem vierten Ort transportiert werden, an dem die fehlerhaften Gruppen in einen Abfallbehälter entleert werden. Die bevorzugte Verwendung des Horizontalförderers, insbesondere eines umlaufenden Förderbands, vereinfacht die konstruktive Gestaltung und die Steuerung der Bewegungen der zwischengelagerten Gruppe von dem ersten Ort zu dem zweiten Ort und dann zu der Verblistervorrichtung oder zu einem Abfallbehälter.

Bei einer alternativen, nicht erfindungsgemäßen Vorrichtung zum Herstellen von Schlauchblistern, bei der die Puffervorrichtung eine Transportvorrichtung aufweist, umfasst die Transportvorrichtung eine Rutsche, deren oberes Ende sich an dem ersten Ort befindet (an dem die Medikamentenportionen von der Sammelvorrichtung übernommen werden) und die an dem zweiten Ort eine Auffangvorrichtung zum Auffangen der herabrutschenden Medikamentenportionen aufweist. Die aufgefangenen Medikamentenportionen können dann (während des Herabrutschens oder danach) der Inspektion unterzogen werden. Die Auffangvorrichtung wird von der Auswerte- und Steuereinrichtung so gesteuert, dass diese nur dann, wenn die durch Auffangen der herabrutschenden Medikamentenportionen gebildete zwischengelagerte Gruppe der vorgegebenen Gruppe entspricht, die Weiterleitung der Gruppe an die Verblistervorrichtung freigibt. Das Vorsehen der Rutsche gestattet ebenfalls eine einfache konstruktive Gestaltung. Die Auffangvorrichtung kann beispielsweise eine freigebbare Sperre, die quer über der Rutsche angeordnet ist, umfassen. Die Sperre kann so ausgebildet sein, dass sie die aufgefangene Gruppe von Medikamentenportionen entweder auf einen ersten abgehenden Pfad weiterlenkt, der zu der Verblistervorrichtung führt, oder auf einen zweiten abgehenden Pfad, der zu einem Abfallbehälter führt.

Bei einer vorteilhaften Weiterbildung der Vorrichtung zum Herstellen von Schlauchblistern umfasst die Sensorvorrichtung eine Kamera, die ein elektronisches Abbild der zwischengelagerten Gruppe von Medikamentenportionen erzeugt. Die Kamera kann eine optische Kamera sein, die beispielsweise ein Abbild der Emissionen im Bereich des sichtbaren Lichtes und/oder im Bereich des infraroten Lichtes erzeugt. Zusätzlich kann eine Vorrichtung vorgesehen sein, die die Gruppe von Medikamentenportionen mit sichtbarem Licht und/oder Infrarotlicht vorgegebener Frequenzen bestrahlt. Es ist auch denkbar, dass sukzessive mehrere Bilder bei verschiedenen Beleuchtungsfrequenzen und/oder unter verschiedenen Blickwinkeln erzeugt werden.

Bei einer bevorzugten Weiterbildung dieser Vorrichtung, bei der die Sensorvorrichtung eine Kamera umfasst, weist die Puffervorrichtung eine mechanische Vereinzelungsvorrichtung auf, die die Medikamentenportionen der zwischengelagerten Gruppe vor der Erfassung des Abbilds (oder der Abbilder) derart vereinzelt, dass sich die Medikamentenportionen im Abbild (oder in den Abbildern) nicht gegenseitig verdecken. Diese mechanische Vereinzelungsvorrichtung kann beispielsweise eine Rüttelvorrichtung umfassen.

Bei einer weiteren Ausführungsform der erfindungsgemäßen Vorrichtung zum Herstellen von Schlauchblistern umfasst die Sensorvorrichtung eine Waage. Die Waage bestimmt das Gesamtgewicht der Medikamentenportionen einer Gruppe. Die Auswerte- und Steuereinrichtung enthält in diesem Fall einen Speicher, der die Einzelgewichte sämtlicher in der Vorrichtung bevorrateter Medikamentenportionen enthält. Auf der Basis der Soll-Zusammensetzung der Gruppe ermittelt die Auswerte- und Steuereinrichtung ein Soll-Gesamtgewicht. Dieses wird dann mit dem von der Waage erfassten Ist-Gesamtgewicht verglichen.

Bei einer Ausführungsform der erfindungsgemäßen Vorrichtung zum Herstellen von Schlauchblistern umfasst die Sammelvorrichtung einen unterhalb der Medikamentenvorratsbehälter angeordneten Sammel- oder Auffangtrichter. Die Austrittsöffnungen der Dispensiervorrichtungen sind dabei so angeordnet, dass sämtliche abgegebenen Medikamentenportionen innerhalb eines vorgegebenen Zeitintervalls in den Sammeltrichter eintreten und dessen Boden erreichen.

Bei einer alternativen Ausführungsform bilden jeweils mehrere übereinander angeordnete Vorratsbehälter der ersten Art, die jeweils eine Vielzahl gleichartiger Medikamentenportionen enthalten, mit jeweils einer zugehörigen Dispensiervorrichtung eine vertikale Säule von Dispensierstationen und sind mehrere gleichartige Dispensierstationen-Säulen in einer Ebene nebeneinander angeordnet (und bilden somit eine vertikale Matrix von Dispensierstationen). Die Sammelvorrichtung weist hier eine Mehrzahl von an den Dispensierstationen-Säulen horizontal vorbeibewegbaren vertikalen Führungsschächten auf, die in den den vertikalen Positionen der Dispensiervorrichtungen entsprechenden Höhen Aufnahmeöffnungen haben, in die die Dispensiervorrichtungen beim Vorbeibewegen eines Führungsschachts Medikamentenportionen abgeben können, so dass sich die Medikamentenportionen in den Führungsschächten nach unten bewegen und an deren unteren Enden aus einer Abgabeöffnung austreten. Dabei ist unter der Abgabeöffnung jedes Führungsschachts ein Sammelbehälter angeordnet, der zusammen mit dem Führungsschacht horizontal bewegt wird, jeweils die Medikamentenportionen einer Gruppe auffängt und dann an die Inspektionspuffervorrichtung abgibt, nachdem der zugehörige Führungsschacht an den Dispensierstationen-Säulen vorbeibewegt worden ist.

Bei dieser zuletzt genannten Ausführungsform einer Vorrichtung zum Herstellen von Schlauchblistern ist es von Vorteil, dass die Sammelbehälter zusätzlich unter Abgabevorrichtungen einer Mehrzahl von Vorratsbehälter einer zweiten Art, die jeweils nur eine Medikamentenportion oder wenige gleiche oder verschiedene Medikamentenportionen enthalten, vorbeibewegt werden, so dass die in den Vorratsbehältern der zweiten Art enthaltene einzelne Medikamentenportion oder die enthaltenen wenigen Medikamentenportionen einer oder mehrerer Medikamentenarten in einen sich vorbeibewegenden Sammelbehälter abgegeben werden können. Dies erhöht die Flexibilität und das Spektrum der in die Taschen der Schlauchblister einfüllbaren Medikamentenarten.

Vorteilhafte und/oder bevorzugte Weiterbildungen der Erfindung sind in den Unteransprüchen gekennzeichnet.

Im Folgenden wird die Erfindung anhand von in den Zeichnungen dargestellten bevorzugten Ausführungsformen näher beschrieben. In den Zeichnungen zeigen:

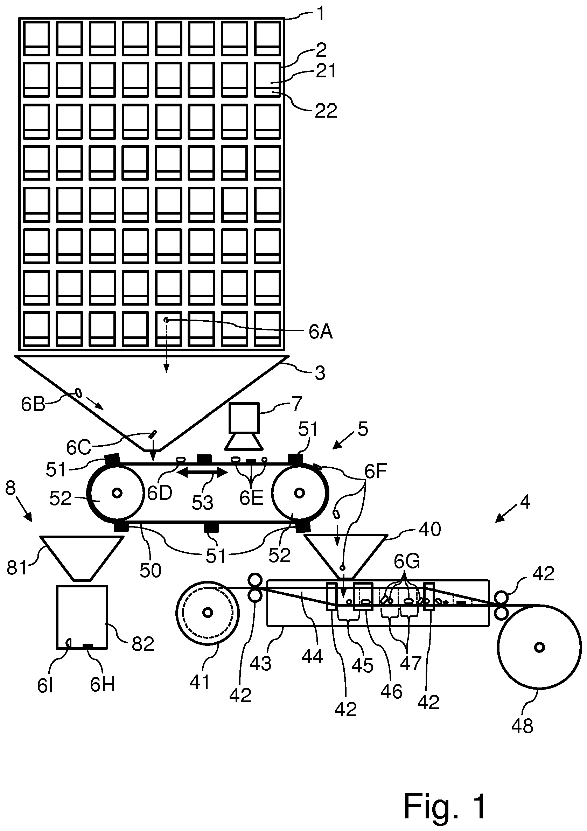

Figur 1 eine schematische Darstellung einer ersten Ausführungsform der erfindungsgemäßen Vorrichtung zum Herstellen von Schlauchblistern, bei der die Dispensiervorrichtungen der Vorratsbehälter die Medikamentenportionen in einen gemeinsamen Sammeltrichter abgeben und bei dem die Puffervorrichtung einen Horizontalförderer aufweist;

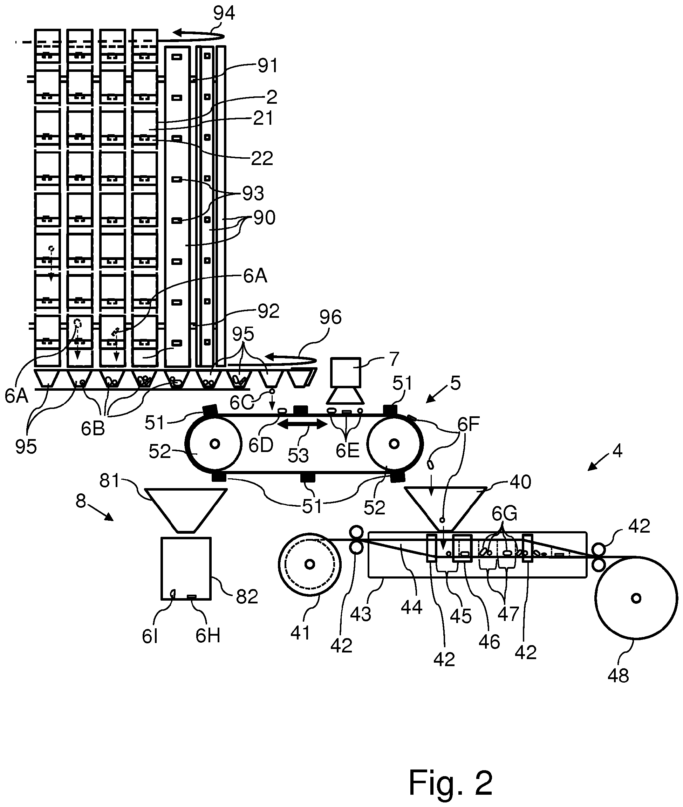

Figur 2 eine schematische Darstellung einer zweiten Ausführungsform der erfindungsgemäßen Vorrichtung zum Herstellen von Schlauchblistern, bei der die Sammelvorrichtung von einer Mehrzahl horizontal bewegter Führungsschächte mit darunter mitbewegten Sammelbehältern gebildet wird und bei dem die Puffervorrichtung einen Horizontalförderer umfasst; und

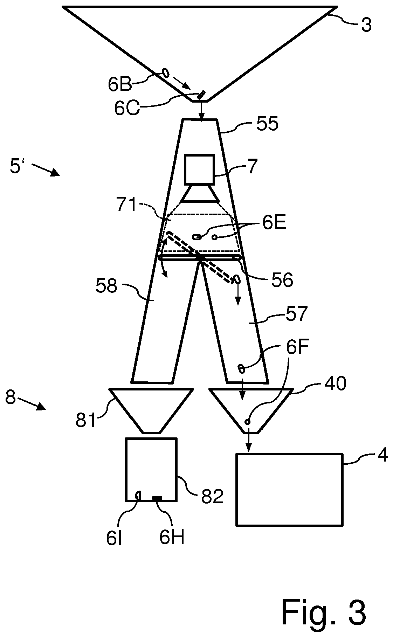

Figur 3 eine schematische Darstellung einer nicht erfindungsgemäßen Puffervorrichtung, bei der die Medikamentenportionen auf Rutschen bewegt werden.
Figur 4 zeigt eine schematische Darstellung einer bekannten Vorrichtung zum Herstellen von Schlauchblistern, bei der die Dispensiervorrichtungen der Vorratsbehälter die Medikamentenportionen in einen gemeinsamen Auffangtrichter abgeben, mit einer nachgeschalteten Inspektionsstation für die hergestellten aufgewickelten Schlauchblister.

Figur 1 zeigt eine schematische Darstellung einer ersten bevorzugten Ausführungsform einer Vorrichtung zum Herstellen von Schlauchblistern. Die Vorrichtung umfasst ein Medikamenten-Vorratslager 1, das eine Vielzahl von Vorratsbehältern 21 für unterschiedliche Medikamente umfasst. Jeder Vorratsbehälter 21 kann eine Vielzahl von gleichartigen Medikamentenportionen einer vorgegebenen Medikamentenart aufnehmen. Jedem Vorratsbehälter 21 ist eine Dispensiervorrichtung 22 zugeordnet, mit deren Hilfe selektiv einzelne Medikamentenportionen aus dem Vorratsbehälter 21 entnommen und abgegeben werden können. Der Vorratsbehälter 21 (auch Kanister genannt) bildet zusammen mit der Dispensiervorrichtung 22 eine Dispensierstation 2. Bei einigen Ausführungsformen umfasst die Dispensierstation 2 eine ortsfest an einem Montagegestell montierte Dispensiervorrichtung 22, welche eine Aufnahme für einen aufsetzbaren Vorratsbehälter 21 aufweist. Der Vorratsbehälter 21 kann manuell aus der Dispensierstation 2 entnommen werden, um beispielsweise nachgefüllt zu werden. Bei dem in Figur 1 dargestellten Ausführungsbeispiel sind die Dispensierstationen 2 beispielsweise an einer Frontseite einer Wand angeordnet und weist diese Wand Öffnungen auf, durch welche die Dispensiervorrichtungen 22 die Medikamentenportionen hindurchtreten lassen, so dass die Medikamentenportionen hinter der Wand sich nach unten in einen Auffangtrichter 3 bewegen. In Figur 1 ist schematisch eine Medikamentenportion 6A gezeigt, die hinter der die Dispensierstationen 2 aufnehmenden Wand nach unten in den Auffangtrichter 3 fällt. Eine bereits in den Auffangtrichter 3 gefallene weitere Medikamentenportion 6B rutscht an der Seitenwandung des Trichters 3 zu einer Austrittsöffnung. Eine dritte Medikamentenportion 6C, welche etwa zeitgleich zu den anderen beiden Medikamentenportionen 6A und 6B von einer der Dispensiervorrichtungen 22 ausgegeben worden ist, ist an einer Position dargestellt, an der sie durch die Austrittsöffnung des Auffangtrichters 3 hindurchtritt.

Die Dispensiervorrichtungen 22 sämtlicher Dispensierstationen 2 werden von einem Steuerungscomputer der Vorrichtung zum Herstellen von Schlauchblistern derart angesteuert, dass die Medikamentenportionen einer Gruppe, die in eine Tasche eines Schlauchblisters eingefüllt werden soll, etwa zeitgleich in den Auffangtrichter 3 fallen und diesen durch dessen Austrittsöffnung verlassen.

An der Austrittsöffnung des Auffangtrichters 3 werden die austretenden Medikamentenportionen von einer Puffervorrichtung 5 aufgefangen. Die Puffervorrichtung 5 umfasst ein horizontales Förderband 50, das über Umlenkrollen 52 läuft und auf dessen Außenseite mit Hilfe von Begrenzungswänden 51 Aufnahmefächer gebildet sind. Die aus dem Auffangtrichter 3 austretenden Medikamentenportionen 6C, 6D fallen in ein durch die Begrenzungswände 51 auf dem Förderband 50 gebildetes Aufnahmefach. Sobald sich eine in eine Tasche des Schlauchblisters einzufüllende Gruppe von Medikamentenportionen in dem Aufnahmefach des Förderbands 50 angesammelt hat, wird das Förderband 50 (in Figur 1 nach rechts) weiterbewegt, so dass die in dem Aufnahmefach enthaltenen Medikamentenportionen 6E in den Erfassungsbereich einer Sensorvorrichtung 7, welche bei dem in Figur 1 dargestellten Ausführungsbeispiel eine Kamera umfasst, gelangen. Die Kamera 7 der Sensorvorrichtung erfasst hier ein Abbild der Gruppe von Medikamentenportionen 6E und leitet das Abbild an eine Auswerte- und Steuereinrichtung, die Bestandteil des Steuercomputers der Vorrichtung zum Herstellen von Schlauchblistern sein kann, weiter. An dem Förderband 50 können weitere Sensoren angeordnet sein, beispielsweise Lichtschranken oder andere Strahlungsdetektoren, die weitere vorgegebene Eigenschaften der Gruppe von Medikamentenportionen 6E erfassen und an die Auswerte- und Steuereinrichtung weitergeben. Die Auswerte- und Steuerreinrichtung bestimmt anhand des von der Sensorvorrichtung erfassten Abbilds bzw. der von der Sensorvorrichtung erfassten vorgegebenen Eigenschaften, ob die zwischengelagerte Gruppe von Medikamentenportionen 6E auf dem Förderband 50 einer Gruppe einzufüllender Medikamentenportionen entspricht, deren Eigenschaften in einem Speicher der Auswerte- und Steuereinrichtung hinterlegt sind. Beispielsweise sind in der Auswerte- und Steuereinrichtung die Form, die Farbe und der Glanz sämtlicher in den Vorratsbehältern 21 gespeicherten Medikamentenportionen hinterlegt. Zugleich weiß die Auswerte- und Steuereinrichtung, welche Gruppen von Medikamentenportionen sukzessive in die Taschen des Schlauchblisters eingefüllt werden sollen. Aus diesen Angaben über die Gruppen und den hinterlegten Eigenschaften der Medikamentenportionen kann die Auswerte- und Steuereinrichtung ein Soll-Abbild ermitteln, welches mit Eigenschaften des von der Kamera 7 erfassten Abbilds verglichen werden kann. Beispielsweise enthält die Auswerte- und Steuereinrichtung eine Objekterkennungssoftware, die das von der Kamera 7 erfasste Bild auswertet. Sobald die Auswerte- und Steuereinrichtung festgestellt hat, dass die zwischengelagerte Gruppe von Medikamentenportionen 6E der vorgegebenen Gruppe einzufüllender Medikamentenportionen entspricht, wird das Förderband 50 weiterbewegt, so dass die Gruppe von Medikamentenportionen an eine Verblistervorrichtung 4 weitergeleitet werden. Beispielsweise wird das Förderband 50 über eine Umlenkrolle 52 gelenkt, unter der ein Auffangtrichter 40 der Verblistervorrichtung 4 angeordnet ist. Wenn das Förderband 50 über die Umlenkrolle 52 läuft, fallen die Medikamentenportionen 6F in den Auffangtrichter 40 und gelangen so zu der Verblistervorrichtung 4.

Unter der Ausgabeöffnung des Auffangtrichters 40 wird von der Verblistervorrichtung 4 eine oben offene Tasche eines herzustellenden Schlauchblisters gebildet. Dies geschieht, indem ein auf einer Vorratsrolle 41 bereitgestelltes Kunststofffolienband über Umlenkrollen 42 gelenkt und dabei im Inneren eines Gehäuses 43 der Verblistervorrichtung 4 zu einer nach oben geöffneten Tasche gefaltet wird, wobei die dann aneinander liegenden beiden Hälften des thermoplastischen Folienbandes quer zur Transportrichtung verschweißt werden, um so die Begrenzungen zwischen den aufeinander folgenden Taschen zu bilden. Sobald durch das Querverschweißen eine noch oben offene Tasche des Schlauchblisters geformt worden ist, wird die in die Tasche aufzunehmende Gruppe von Medikamentenportionen 6F eingefüllt. Anschließend wird die Tasche an ihre Oberseite in Längsrichtung verschweißt, so dass die eingefüllte Gruppe von Medikamentenportionen eingeschlossen ist.

Figur 1 zeigt schematisch einzelne Taschen 47 des Schlauchblisters, die mit Gruppen von Medikamentenportionen 6G gefüllt sind. Eine in eine Tasche 47 eines Schlauchblisters eingefüllte Gruppe von Medikamentenportionen 6G kann beispielsweise eine einzelne Medikamentenportion, d. h. eine Tablette, eine Kapsel oder ein Dragee, umfassen; sie kann auch mehrere gleichartige oder unterschiedliche Medikamentenportionen umfassen. Der so hergestellte Schlauchblister wird wiederum über Führungsrollen 42 gelenkt und auf eine Rolle 48 aufgewickelt.

Wenn jedoch die Auswerte- und Steuereinrichtung anhand des von der Kamera 7 der Sensorvorrichtung erfassten Abbilds und ggf. anhand weiterer von der Sensorvorrichtung erfasster vorgegebener Eigenschaften feststellt, dass die von der Puffervorrichtung 5 auf dem Förderband 50 zwischengelagerte Gruppe von Medikamentenportionen 6E nicht der zugehörigen vorgegebenen Gruppe einzufüllender Medikamentenportionen entspricht, so wird diese Gruppe von Medikamentenportionen 6E nicht weiter in Richtung der Verblistervorrichtung 4 transportiert. Stattdessen wird die Gruppe von Medikamentenportionen entweder, bei Feststellung fehlender Medikamentenportionen, korrigiert, d. h. aufgefüllt, oder sie wird, insbesondere bei der Feststellung falscher, defekter oder überzähliger Medikamentenportionen, ausgesondert. Wenn die Auswerte- und Steuereinrichtung aufgrund der Informationen der Sensorvorrichtung eindeutig bestimmen kann, ob und welche Medikamentenportionen in der Gruppe fehlen, so wird das Förderband 50 in entgegengesetzter Richtung (d. h. in Figur 1 nach links) bewegt, so dass das die unvollständige Gruppe enthaltende Aufnahmefach wieder unter die Austrittsöffnung des Auffangtrichters 3 gelangt. Anschließend werden entsprechende Dispensiervorrichtungen 22 so angesteuert, dass die fehlenden Medikamentenportionen in den Auffangtrichter 3 fallen und von dort in das zu vervollständigende Aufnahmefach auf dem Förderband 50 gelangen. Anschließend wird das Förderband wieder nach rechts bewegt, so dass die Kamera 7 erneut ein Abbild der ergänzten Gruppe von Medikamentenportionen 6E erfassen kann.

Wird jedoch festgestellt, dass die Gruppe von Medikamentenportionen 6E falsche, defekte (z.B. zerbrochene) und/oder überzählige Medikamentenportionen enthält, so wird das Förderband 50 so weit nach links zurückbewegt, dass das Aufnahmefach auf dem Förderband über die linke Umlenkrolle 52 bewegt wird, so dass die fehlerhafte Gruppe von Medikamentenportionen in einen Auffangtrichter 81 einer Aussondervorrichtung 8 fallen. Von dort gelangen die Medikamentenportionen in einen Abfallbehälter 82. Der Abfallbehälter 82 sammelt somit Medikamentenportionen 6H und Teile von Medikamentenportionen 6I der fehlerhaften Gruppen, die ausgesondert wurde. Nach dem Aussondern der fehlerhaften Gruppe von Medikamentenportionen kann anschließend wieder eine neue Gruppe von Medikamentenportionen für dieselbe Tasche des Schlauchblisters zusammengestellt und mit Hilfe der Kamera 7 einer Inspektion unterzogen werden.

Diese Vorgänge werden solange wiederholt, bis ein Schlauchblister mit korrekt gefüllten Taschen hergestellt worden ist. Ein auf diese Weise hergestellter Schlauchblister braucht anschließend nicht einer Inspektion hinsichtlich einer fehlerhaften Befüllung unterzogen zu werden.

Figur 2 zeigt eine alternative Ausführungsform der erfindungsgemäßen Vorrichtung zum Herstellen von Schlauchblistern. Diese Ausführungsform enthält Dispensierstationen 2, eine Puffervorrichtung 5, eine Verblistervorrichtung 4 und eine Aussondervorrichtung 8, die sich von den entsprechenden Vorrichtungen des Ausführungsbeispiels gemäß Figur 1 nicht unterscheiden, so dass diese hier nicht näher beschrieben zu werden brauchen. Die Vorrichtung gemäß Figur 2 unterscheidet sich von der Vorrichtung gemäß Figur 1 nur hinsichtlich der Art der Weiterleitung der von den Dispensiervorrichtungen 22 der Dispensierstationen 2 ausgegebenen Medikamentenportionen an die Puffervorrichtung. Wie auch bei dem Ausführungsbeispiel gemäß Figur 1 sind bei der Ausführungsform gemäß Figur 2 die Medikamentenportionen in Vorratsbehältern 21 gelagert. Die aus Vorratsbehältern 21 und Dispensiervorrichtungen 22 bestehenden Dispensierstationen 2 werden in gleicher Weise von dem Steuerungscomputer der Vorrichtung zum Herstellen von Schlauchblistern angesteuert, so dass die einzufüllenden Medikamentenportionen ausgegeben werden. Hierbei fallen jedoch die Medikamentenportionen nicht in einen großen gemeinsamen Sammeltrichter; vielmehr wird jeweils benachbart zu einer vertikalen Säule übereinander angeordneter Dispensierstationen 2 ein Führungsschacht 90 positioniert. Der Führungsschacht 90 ist ein innen hohler vertikaler Führungsschacht, der eine Reihe übereinander angeordneter Eintrittsöffnungen 93 aufweist. Wenn ein solcher Führungsschacht 90 unmittelbar hinter und benachbart zu einer vertikalen Säule von Dispensierstationen positioniert ist, so befinden sich die Eintrittsöffnungen 93 benachbart zu den Austrittsöffnungen der Dispensiervorrichtungen 22 der Dispensierstationen-Säule. Die aus den Dispensiervorrichtungen 22 austretenden Medikamentenportionen treten somit durch die Eintrittsöffnungen 93 in den vertikalen Führungsschacht 90 ein und fallen in diesem nach unten. Die Führungsschächte 90 werden in horizontaler Richtung von einer vertikalen Säulen zur jeweils benachbarten Säule weiter bewegt, so dass sie bei jedem Umlauf an sämtlichen Säulen von Dispensierstationen 2 vorbeigeführt werden. Bei einer entsprechenden Taktung der Ausgabe von Medikamentenportionen durch die Dispensiervorrichtungen 22 kann somit jede Dispensierstation 2 ihre Medikamentenportionen in einen bestimmten Führungsschacht 90 abgeben. Darüber hinaus ist es möglich, dass dann, wenn eine Säule von Dispensierstationen 2 ihre Medikamentenportionen in einen ersten Führungsschacht 90 abgibt, eine benachbarte Säule von Dispensierstationen 2 ihre Medikamentenportionen an einen benachbarten Führungsschacht 90 abgeben kann. Dies erlaubt das zeitlich parallele Ansammeln von Gruppen von Medikamentenportionen in verschiedenen Führungsschächten 90.

Unter den unteren Enden der Führungsschächte 90 befinden sich kleine Sammelbehälter 95, die zusammen mit den Führungsschächten 90 bewegt werden. In diese Sammelbehälter fallen die in den Führungsschächten 90 herabfallenden Medikamentenportionen, so dass sukzessive in der Kette von Sammelbehältern 95 die einzelnen Gruppen von Medikamentenportionen angesammelt werden können.

Die Dispensierstationen 2 sind beispielsweise in einer Matrix von Säulen und Zeilen in einer horizontalen Ebene angeordnet, wobei sich die Führungsschächte 90 benachbart zu dieser vertikalen Ebene von Dispensierstationen 2 bewegen. Dabei sind die Führungsschächte 90 beispielsweise mit Transportbändern 92 verbunden, die die Führungsschächte 90 zunächst in einer Ebene hinter den Dispensierstationen 2 entlang führen und dann umlenken, so dass die Führungsschächte 90 wieder zurückgeführt werden und erneut an den Dispensierstationen 2 vorbeigeführt werden können. Das Umlenken der miteinander gekoppelten Führungsschächte 90 ist durch einen Pfeil 94 veranschaulicht. Die Sammelbehälter 95 sind ebenfalls miteinander zu einer Kette verbunden und werden mit gleicher Geschwindigkeit wie auch die Führungsschächte 90 in horizontaler Richtung bewegt. Auch hier ist das Umlenken der Kette von Sammelbehältern 95 durch einen Pfeil 96 veranschaulicht. Die Sammelbehälter 95 werden hierbei vorzugsweise über den Umlenkpunkt der Führungsschächte 90 hinaus (in Figur 2 weiter nach rechts) geführt, wobei sie dort in Aufnahmefächer der Transportvorrichtung 50 der Puffereinrichtung 5 entleert werden können.

Figur 3 zeigt eine nicht beanspruchte Ausführungsform für eine Puffervorrichtung 5', welche zum Transportieren der Medikamentenportionen kein Förderband, sondern eine Rutsche 55 verwendet. Die Rutsche 55 ist derart geneigt, dass die aus der Ausgabeöffnung des Sammeltrichters 3 austretenden Medikamentenportionen 6C auf einen höchsten Punkt der Rutsche auftreffen und von dort zunächst zu einem Auffangbereich hinabrutschen, an dem eine Sperre 56 ein Weiterrutschen der Medikamentenportionen verhindert. Die hinabrutschenden Medikamentenportionen 6E sammeln sich somit oberhalb der Sperre 56 an und befinden sich dann in einem Erfassungsbereich 71 der Kamera 7. Die Kamera 7 erfasst wiederum ein Abbild der dort zwischengelagerten Medikamentenportionen 6E, welches an die Auswerte- und Steuereinrichtung weitergeleitet wird. Die Auswerte- und Steuereinrichtung bestimmt anhand des von der Kamera 7 erfassten Abbilds, ob die in dem Auffangbereich zwischengelagerte Gruppe von Medikamentenportionen 6E einer vorgegebenen Gruppe einzufüllender Medikamentenportionen entspricht. Wenn dies der Fall ist, wird die Sperre 56 derart freigegeben, dass sich die Medikamentenportionen 6E auf einer sich anschließenden Rutsche 57 weiterbewegen, wobei die Medikamentenportionen 6F dann in einen Auffangtrichter 40 der bereits in Verbindung mit Figur 1 beschriebenen Verblistervorrichtung 4 fallen.

Stellt die Auswerte- und Steuereinrichtung jedoch fest, dass die zwischengelagerte Gruppe von Medikamentenportionen 6E nicht der vorgegebenen Gruppe einzufüllender Medikamentenportionen entspricht, so wird die Sperre 56 in anderer Weise freigegeben, so dass die Medikamentenportionen 6E jetzt auf eine andere Rutsche 58 gelangen, von der sie in einen Auffangtrichter 81 eines Abfallbehälters 82 fallen.

Die Puffervorrichtung 5 sollte vorzugsweise so ausgebildet sein, dass der Transportweg zwischen dem ersten Ort, an dem die Medikamentenportionen aufgefangen werden, und dem zweiten Ort, an dem die Sensorvorrichtung ein Abbild oder vorgegebene Eigenschaften der Medikamentenportionen erfasst, möglichst kurz sind. Die Transportvorrichtung kann nach einer nicht erfindungsgemäßen Ausführungsform so gestaltet werden, dass dann, wenn eine fehlerhafte Gruppe von Medikamentenportionen am Ort der Sensoreinrichtung festgestellt wird, unmittelbar an dem ersten Ort mit dem Ansammeln einer korrigierten Ersatz-Gruppe von Medikamentenportionen begonnen wird, und dass die fehlerhafte Gruppe ausgesondert wird, während die Ersatz-Gruppe zu der Sensorvorrichtung bewegt wird. Wird bei einer solchen Ausführungsform das in den Figuren 1 und 2 dargestellte Förderband verwendet, so könnte sich an dem rechten Ende des Förderbands 50, d. h. an der rechten Umlenkrolle 52, eine Umlenkeinrichtung für die dort herabfallenden Medikamentenportionen 6F befinden, wobei diese Umlenkvorrichtung die herabfallenden Medikamentenportionen entweder (bei einer korrekten Gruppe) in den Auffangtrichter 40 der Verblistervorrichtung 4 oder (bei fehlerhafter Gruppe) in einen Auffangtrichter eines Abfallbehälters lenkt.

## Patentansprüche

1. Vorrichtung zum Herstellen von Schlauchblistern mit einer Mehrzahl von Vorratsbehältern (21) zum Bereitstellen von Medikamentenportionen, mit
Dispensiervorrichtungen (22) zum selektiven Abgeben von Medikamentenportionen (6) aus den Vorratsbehältern und mit einer Sammelvorrichtung (3; 90, 95) zum Aufnehmen der von den Dispensiervorrichtungen (22) abgegebenen Medikamentenportionen (6) und Weiterleiten der Medikamentenportionen (6) an eine Verblistervorrichtung (4), wobei die Verblistervorrichtung (4) die empfangenen Medikamentenportionen (6) gruppenweise in Taschen (47) eines Schlauchblisters einfüllt, wobei eine in eine Tasche (47) eingefüllte Gruppe eine Medikamentenportion (6) oder mehrere gleichartige oder unterschiedliche Medikamentenportionen (6) umfasst,
einer zwischen der Sammelvorrichtung (3; 90, 95) und der Verblistervorrichtung (4) angeordneten Inspektionspuffervorrichtung mit:
einer Puffervorrichtung (5) zum Aufnehmen der von der Sammelvorrichtung (3; 90, 95) weitergeleiteten Medikamentenportionen (6) und zum Zwischenlagern zumindest einer zum Einfüllen in eine Tasche vorgesehenen Gruppe von Medikamentenportionen, wobei die Puffervorrichtung (5) eine Transportvorrichtung (50) aufweist, die die von der Sammelvorrichtung (3; 90, 95) weitergeleiteten Medikamentenportionen (6) an einem ersten Ort aufnimmt und zu einem zweiten Ort transportiert, an dem die Sensorvorrichtung (7) das Abbild und/oder die vorgegebenen Eigenschaften der zwischengelagerten Gruppe von Medikamentenportionen (6) erfasst,
einer Sensorvorrichtung (7) zum Erfassen eines Abbilds und/oder vorgegebener Eigenschaften der zwischengelagerten Gruppe von Medikamentenportionen (6) und
einer Auswerte- und Steuereinrichtung, die anhand des von der Sensorvorrichtung (7) erfassten Abbilds und/oder der von der Sensorvorrichtung (7) erfassten vorgegebenen Eigenschaften bestimmt, ob die zwischengelagerte Gruppe von Medikamentenportionen (6) einer vorgegebenen Gruppe einzufüllender Medikamentenportionen entspricht, und die die Puffervorrichtung (5) derart steuert, dass diese nur dann, wenn die zwischengelagerte Gruppe der vorgegebenen Gruppe entspricht, die zwischengelagerte Gruppe an die Verblistervorrichtung (4) weiterleitet wobei die Transportvorrichtung (50) dazu ausgebildet ist die zwischengelagerte Gruppe an die Verblistervorrichtung (4) weiterzuleiten wenn die zwischengelagerte Gruppe von Medikamentenportionen (6) der vorgegebenen Gruppe einzufüllender Medikamentenportionen entspricht,
**dadurch gekennzeichnet,**
**dass** die Transportvorrichtung (50) dazu ausgebildet ist die zwischengelagerte Gruppe zurück zu dem ersten Ort zu transportieren, um dort der Gruppe die fehlende(n) Medikamentenportion (en) zuführen zu können, wenn die zwischengelagerte Gruppe von Medikamentenportionen (6) nicht der vorgegebenen Gruppe einzufüllender Medikamentenportionen entspricht, weil der zwischengelagerten Gruppe eine oder mehrere Medikamentenportionen fehlen.

2. Vorrichtung zum Herstellen von Schlauchblistern nach Anspruch 1, **dadurch gekennzeichnet, dass** die Transportvorrichtung (50) dazu ausgebildet ist die zwischengelagerte Gruppe auszusondern, wenn die zwischengelagerte Gruppe von Medikamentenportionen (6) nicht der vorgegebenen Gruppe einzufüllender Medikamentenportionen entspricht, weil die zwischengelagerte Gruppe falsche, defekte und/oder überzählige Medikamentenportionen enthält.

3. Vorrichtung zum Herstellen von Schlauchblistern nach einem der Ansprüche 1 oder 2, **dadurch gekennzeichnet, dass** die Transportvorrichtung einen Horizontalförderer (50) umfasst, der wenigstens ein Aufnahmefach aufweist, das zur Aufnahme von Medikamentenportionen an den ersten Ort und zur Erfassung eines Abbilds und/oder vorgegebener Eigenschaften der Gruppe durch die Sensorvorrichtung an den zweiten Ort bewegt werden kann.

4. Vorrichtung zum Herstellen von Schlauchblistern nach einem der Ansprüche 1 - 3, **dadurch gekennzeichnet, dass** die Transportvorrichtung eine Rutsche (55) umfasst, deren oberes Ende sich an dem ersten Ort befindet und die an dem zweiten Ort eine Auffangvorrichtung zum Auffangen der herabrutschenden Medikamentenportionen aufweist, wobei die Auffangvorrichtung von der Auswerte- und Steuereinrichtung so gesteuert wird, dass diese nur dann, wenn die durch Auffangen der herabrutschenden Medikamentenportionen gebildete zwischengelagerte Gruppe der vorgegebenen Gruppe entspricht, die Weiterleitung der Gruppe an die Verblistervorrichtung (4) freigibt.

5. Vorrichtung zum Herstellen von Schlauchblistern nach einem der Ansprüche 1 - 4, **dadurch gekennzeichnet, dass** die Sensorvorrichtung (7) eine Kamera umfasst, die dazu geeignet ist ein Abbild der zwischengelagerten Gruppe von Medikamentenportionen (6) zu erfassen.

6. Vorrichtung zum Herstellen von Schlauchblistern nach Anspruch 5, **dadurch gekennzeichnet, dass** die Puffervorrichtung eine mechanische Vereinzelungsvorrichtung aufweist, die die Medikamentenportionen (6) der zwischengelagerten Gruppe vor der Erfassung des Abbilds derart vereinzelt, dass sich die Medikamentenportionen (6) im Abbild nicht gegenseitig verdecken.

7. Vorrichtung zum Herstellen von Schlauchblistern nach einem der Ansprüche 1 - 6, **dadurch gekennzeichnet, dass** die Sensorvorrichtung (7) eine Waage umfasst.

8. Vorrichtung zum Herstellen von Schlauchblistern nach einem der Ansprüche 1 - 7, **dadurch gekennzeichnet, dass** die Vorratsbehälter zum Bereitstellen von Medikamentenportionen erste Vorratsbehälter (21), die jeweils eine Vielzahl gleichartiger Medikamentenportionen einer vorgegebenen Medikamentenart enthalten, und/oder zweite Vorratsbehälter, die jeweils nur eine Medikamentenportion oder wenige Medikamentenportionen einer oder mehrerer Medikamentenarten enthalten, umfassen.

9. Vorrichtung zum Herstellen von Schlauchblistern nach einem der Ansprüche 1 - 8, **dadurch gekennzeichnet, dass** die Sammelvorrichtung einen unterhalb der Medikamentenvorratsbehälter (2) angeordneten Sammeltrichter (3) umfasst.

10. Vorrichtung zum Herstellen von Schlauchblistern nach Anspruch 8, **dadurch gekennzeichnet,**
**dass** jeweils mehrere übereinander angeordnete erste Vorratsbehälter (21) mit jeweils einer zugehörigen Dispensiervorrichtung (22) eine vertikale Säule von Dispensierstationen (2) bilden und mehrere gleichartige Dispensierstationen-Säulen in einer Ebene nebeneinander angeordnet sind,
**dass** die Sammelvorrichtung eine Mehrzahl von an den Dispensierstationen-Säulen horizontal vorbeibewegbaren vertikalen Führungsschächten (90) aufweist, die Aufnahmeöffnungen (93) haben, in welche die Dispensiervorrichtungen (22) beim Vorbeibewegen eines Führungsschachts (90) Medikamentenportionen abgeben, so dass sich die Medikamentenportionen in den Führungsschächten (90) nach unten bewegen und an deren unteren Enden aus einer Abgabeöffnung austreten, und
**dass** unter der Abgabeöffnung jedes Führungsschachts (90) ein Sammelbehälter (95) angeordnet ist, der zusammen mit dem Führungsschacht (90) horizontal bewegbar ist, um jeweils die Medikamentenportionen einer Gruppe aufzufangen und an die Inspektionspuffervorrichtung abzugeben, nachdem der zugehörige Führungsschacht (90) an den Dispensierstationen-Säulen vorbeibewegt worden ist.

11. Vorrichtung zum Herstellen von Schlauchblistern nach Anspruch 10, **dadurch gekennzeichnet, dass** die Sammelbehälter zusätzlich unter Abgabevorrichtungen der zweiten Vorratsbehälter vorbeibewegbar sind, so dass die in den zweiten Vorratsbehältern enthaltene einzelne Medikamentenportion oder die enthaltenen wenigen Medikamentenportionen einer oder mehrerer Medikamentenarten in einen sich vorbeibewegenden Sammelbehälter abgegeben werden können.

## Claims

1. A device for producing blister packs with a plurality of storage compartments (21) for supplying doses of medication, having
dispensing devices (22) for the selective delivery of doses of medication (6) from the storage compartments and having a collecting device (3; 90, 95) for receiving the doses of medication (6) delivered by the dispensing devices (22) and passing on the doses of medication (6) to a blistering device (4), wherein the blistering device (4) fills the pockets (47) of a blister pack in groups with the doses of medication (6) received, wherein a group with which a pocket (47) is filled comprises a dose of medication (6) or several identical or different doses of medication (6),
an inspection buffer device arranged between the collecting device (3; 90, 95) and the blistering device (4) having:
a buffer device (5) for receiving the doses of medication (6) passed on from the collecting device (3; 90, 95) and for the temporary storage of at least one group of doses of medication provided for filling a pocket, wherein the buffer device (5) has a transport device (50) which receives the doses of medication (6) passed on by the collecting device (3; 90, 95) at a first location and transports them to a second location at which the sensor device (7) captures the image and/or the predetermined properties of the group of doses of medication (6) in temporary storage,
a sensor device (7) for capturing an image and/or predetermined properties of the group of doses of medication (6) in temporary storage and
an evaluation and control device which, with the help of the image captured by the sensor device (7) and/or the predetermined properties captured by the sensor device (7), determines whether the group of doses of medication (6) in temporary storage corresponds to a predetermined group of doses of medication to be used for filling and which controls the buffer device (5) in such a manner that it only passes on the group in temporary storage to the blistering device (4) if the group in temporary storage corresponds to the predetermined group,
wherein the transport device (50) is configured to pass on the group in temporary storage to the blistering device (4) when the group of doses of medication (6) in temporary storage corresponds to the predetermined group of doses of medication to be used for filling, **characterized in that**
the transport device (50) is configured to transport the group in temporary storage back to the first location, so that the missing dose(s) of medication can be supplied to the group there, if the group of doses of medication (6) in temporary storage does not correspond to the predetermined group of doses of medication to be used for filling, because one or several doses of medication is/are missing from the group in temporary storage.

2. The device for producing blister packs according to claim 1, **characterized in that** the transport device (50) is designed to separate out the group in temporary storage if the group of doses of medication (6) in temporary storage does not correspond to the predetermined group of doses of medication to be used for filling, because the group in temporary storage contains incorrect, defective and/or surplus doses of medication.

3. The device for producing blister packs according to one of claims 1 or 2, **characterized in that** the transport device comprises a horizontal conveyor (50) which has at least one receiving compartment which can be moved to the first location for receiving doses of medication and to the second location for capturing an image and/or predetermined properties of the group by the sensor device.

4. The device for producing blister packs according to one of claims 1 to 3, **characterized in that** the transport device comprises a chute (55), the upper end whereof is located at the first location and which has an intercepting device at the second location for intercepting the doses of medication as they slide down, wherein the intercepting device is controlled by the evaluation and control device in such a manner that it only allows the onward movement of the group to the blistering device (4) if the temporarily stored group formed through the interception of the doses of medication sliding down corresponds to the predetermined group.

5. The device for producing blister packs according to one of claims 1 to 4, **characterized in that** the sensor device (7) comprises a camera which is suitable for capturing an image of the group of doses of medication (6) in temporary storage.

6. The device for producing blister packs according to claim 5, **characterized in that** the buffer device has a mechanical isolating device which isolates the doses of medication (6) in the temporarily stored group before the image is captured, in such a manner that the doses of medication (6) do not conceal one another in the image.

7. The device for producing blister packs according to one of claims 1 to 6, **characterized in that** the sensor device (7) comprises a balance.

8. The device for producing blister packs according to one of claims 1 to 7, **characterized in that** the storage compartments for supplying doses of medication comprise first storage compartments (21) which each contain a plurality of identical doses of medication of a predetermined type of medication and/or second storage compartments which each contain only one dose of medication or a small number of doses of medication of one or several kinds of medication.

9. The device for producing blister packs according to one of claims 1 to 8, **characterized in that** the collecting device comprises a collecting funnel (3) arranged below the medication storage container (2).

10. The device for producing blister packs according to claim 8, **characterized in that**
several first storage compartments (21) each arranged above one another each with an associated dispensing device (22) form a vertical column of dispensing stations (2) and several identical dispensing station columns are arranged alongside one another in a plane,
that the collecting device has a plurality of vertical guide shafts (90) that can be moved past the dispensing station columns horizontally, which guide shafts have receiving openings (93) into which the dispensing devices (22) deliver doses of medication when moving past a guide shaft (90), so that the doses of medication move downwards in the guide shafts (90) and leave from a delivery opening at the lower ends of said guide shafts and
that a collecting container (95) is arranged below the delivery opening of each guide shaft (90) which is horizontally movable along with the guide shaft (90), in order to intercept the doses of medication of each group and deliver them to the inspection buffer device after the associated guide shaft (90) has moved past the dispensing station columns.

11. The device for producing blister packs according to claim 10, **characterized in that** the collecting containers can in addition be moved past below delivery devices of the second storage containers, so that the individual dose of medication or the small number of doses of medication of one or several kinds of medication contained in the second storage containers can be delivered into a passing collecting container.

## Revendications

1. Dispositif pour la fabrication de blisters souples, avec une pluralité de récipients de stockage (21) pour la mise à disposition de doses de médicaments, comprenant
des dispositifs de distribution (22) pour la délivrance sélective de doses de médicaments (6) à partir des récipients de stockage, et un dispositif de collecte (3 ; 90, 95) pour la réception des doses de médicaments (6) délivrées par les dispositifs de distribution (22), et pour le transfert des doses de médicaments (6) à un dispositif de conditionnement sous blister (4), où le dispositif de conditionnement sous blister (4) remplit les doses de médicaments (6) reçues par groupes dans des poches (47) d'un blister souple, où un groupe rempli dans une poche (47) comporte une dose de médicament (6) ou plusieurs doses de médicaments (6) similaires ou différents,
un dispositif tampon d'inspection disposé entre le dispositif de collecte (3 ; 90, 95) et le dispositif de conditionnement sous blister (4), comprenant :
un dispositif tampon (5) pour la réception des doses de médicaments (6) transférées par le dispositif de collecte (3 ; 90, 95), et l'entreposage d'au moins un groupe de doses de médicaments prévu pour le remplissage d'une poche, où le dispositif tampon (5) présente un dispositif de transport (50) recevant des doses de médicaments (6) transférées par le dispositif de collecte (3 ; 90, 95) en un premier endroit et transportant celles-ci en un deuxième endroit, où le dispositif de détection (7) détecte l'image et/ou les propriétés prédéfinies du groupe de doses de médicaments (6) entreposé,
un dispositif de détection (7) pour la détection d'une image et/ou de propriétés prédéfinies du groupe de doses de médicaments (6) entreposé, et
un dispositif d'évaluation et de commande chargé de déterminer, à l'aide de l'image détectée par le dispositif de détection (7) et/ou des propriétés prédéfinies détectées par le dispositif de détection (7), si le groupe de doses de médicaments (6) entreposé correspond à un groupe prédéfini des doses de médicaments à remplir, et de commander le dispositif tampon (5) de manière à ce que celui-ci transfère le groupe entreposé au dispositif de conditionnement sous blister (4) seulement si le groupe entreposé correspond au groupe prédéfini,
dans lequel le dispositif de transport (50) est conçu pour transférer le groupe entreposé au dispositif de conditionnement sous blister (4) lorsque le groupe de doses de médicaments (6) entreposé correspond au groupe prédéfini de doses de médicaments à remplir, **caractérisé en ce que**
le dispositif de transport (50) est conçu pour ramener le groupe entreposé vers le premier endroit, afin pouvoir ajouter la/les dose/doses de médicaments manquante(s) au groupe, lorsque le groupe de doses de médicaments (6) entreposé ne correspond pas au groupe prédéfini de doses de médicaments à remplir, en raison d'une ou de plusieurs doses de médicaments manquantes dans le groupe entreposé.

2. Dispositif pour la fabrication de blisters souples selon la revendication 1, **caractérisé en ce que** le dispositif de transport (50) est conçu pour séparer le groupe entreposé, lorsque le groupe de doses de médicaments (6) entreposé ne correspond pas au groupe prédéfini de doses de médicaments à remplir, en raison du fait que le groupe entreposé contient des doses de médicaments erronées, défectueuses et/ou en excédentaires.

3. Dispositif pour la fabrication de blisters souples selon l'une des revendications 1 ou 2, **caractérisé en ce que** le dispositif de transport comporte un convoyeur horizontal (50) présentant au moins un compartiment de réception susceptible d'être déplacé vers le premier endroit pour la réception de doses de médicaments et vers le deuxième endroit pour la détection d'une image et/ou de propriétés prédéfinies du groupe par le dispositif de détection.

4. Dispositif pour la fabrication de blisters souples selon l'une des revendications 1 à 3, **caractérisé en ce que** le dispositif de transport comporte une goulotte (55) dont l'extrémité supérieure se trouve au premier endroit et laquelle présente un dispositif récepteur au deuxième endroit, pour la réception des doses de médicaments glissant vers le bas, le dispositif récepteur étant commandé de telle façon par le dispositif d'évaluation et de commande, que celui-ci autorise le transfert d'un groupe au dispositif de conditionnement sous blister (4) seulement si le groupe entreposé formé par la réception des doses de médicaments glissant vers le bas correspond au groupe prédéfini.

5. Dispositif pour la fabrication de blisters souples selon l'une des revendications 1 à 4, **caractérisé en ce que** le dispositif de détection (7) comporte une caméra adaptée pour capturer une image du groupe de doses de médicaments (6) entreposé.

6. Dispositif pour la fabrication de blisters souples selon la revendication 5, **caractérisé en ce que** le dispositif tampon présente un dispositif de séparation mécanique chargé de séparer les doses de médicaments (6) du groupe entreposé avant la capture de l'image, de telle façon que les doses de médicaments (6) sur l'image ne se masquent pas mutuellement.

7. Dispositif pour la fabrication de blisters souples selon l'une des revendications 1 à 6, **caractérisé en ce que** le dispositif de détection (7) comporte une balance.

8. Dispositif pour la fabrication de blisters souples selon l'une des revendications 1 à 7, **caractérisé en ce que** les récipients de stockage pour la mise à disposition de doses de médicaments comportent des premiers récipients de stockage (21) contenant respectivement une multitude de doses de médicaments similaires d'un type de médicaments prédéfini, et/ou des deuxièmes récipients de stockage contenant respectivement une seule dose de médicaments ou une petite quantité de doses de médicaments ou plusieurs types de médicaments.

9. Dispositif pour la fabrication de blisters souples selon l'une des revendications 1 à 8, **caractérisé en ce que** le dispositif de collecte comporte un entonnoir de collecte (3) disposé en dessous des récipients de stockage de médicaments (2).

10. Dispositif pour la fabrication de blisters souples selon la revendication 8, **caractérisé en ce que**
plusieurs premiers récipients de stockage (21) disposés les uns au-dessus des autres, respectivement avec un dispositif de distribution (22) correspondant, forment respectivement une colonne verticale de stations de distribution (2), et **en ce que** plusieurs colonnes de stations de distribution similaires sont disposées côte à côte dans un plan,
le dispositif de collecte présente une pluralité de puits de guidage (90) verticaux déplaçables horizontalement devant les colonnes de stations de distribution, lesquels possèdent des ouvertures de réception (93), dans lesquelles les dispositifs de distribution (22) délivrent des doses de médicaments lors du déplacement d'un puits de guidage (90), de telle façon que les doses de médicaments se déplacent vers le bas dans les puits de guidage (90) et sortent par une ouverture de délivrance aux les extrémités inférieures de ceux-ci, et
un récipient de collecte (95) est disposé sous l'ouverture de délivrance de chaque puits de guidage (90), lequel est déplaçable horizontalement ensemble avec le puits de guidage (90), pour recevoir respectivement les doses de médicaments d'un groupe et les délivrer au dispositif tampon d'inspection, après le passage du puits de guidage (90) correspondant devant les colonnes de stations de distribution.

11. Dispositif pour la fabrication de blisters souples selon la revendication 10, **caractérisé en ce que** les récipients de stockage peuvent en outre être déplacés sous des dispositifs de délivrance des deuxièmes récipients de stockage, de telle façon que les doses de médicaments individuelles contenues dans les deuxièmes récipients de stockage ou les petites quantités de doses de médicaments d'un ou plusieurs types de médicaments contenues dans ceux-ci peuvent être délivrées dans un récipient de collecte déplacé devant ceux-ci.
